# FASCICULE DE BREVET EUROPEEN

(11) **EP 0 694 001 B1**
(45) Date de publication et mention de la délivrance du brevet: **29.12.1997**
(21) Numéro de dépôt: 95908301.5
(22) Date de dépôt: 02.02.1995
(51) Int. Cl.: B60R 9/042

(54) **DISPOSITIF ELEVATEUR DE FAUTEUIL ROULANT REPLIABLE SUR LE TOIT D'UN VEHICULE AUTOMOBILE**
AUF EINEM WAGENDACH SCHWENKBARE HEBEVORRICHTUNG FÜR EINEN ROLLSTUHL
ROOF-MOUNTED COLLAPSIBLE WHEELCHAIR LIFT DEVICE FOR MOTOR VEHICLES

(30) Priorité: 14.02.1994 FR 9401729
(43) Date de publication de la demande: 31.01.1996
(73) Titulaire: OKEY S.A., 78570 Chanteloup les Vignes (FR)
(72) Inventeur: Pochon, Jean-Pierre, 01200 Bellegarde sur Valserine (FR)
(74) Mandataire: Kiehl, Hubert
(86) Numéro de dépôt international: FR9500126
(87) Numéro de publication internationale: WO9521751

(56) Documents cités:
- FR-A- 2 587 018
- US-A- 3 608 759
- US-A- 3 878 955

## Description

La présente invention concerne un dispositif élévateur de fauteuil roulant repliable sur le toit d'un véhicule automobile et notamment un dispositif élévateur des fauteuils roulants repliables des personnes handicapées des membres inférieurs et qui néanmoins, peuvent conduire un véhicule adapté uniquement au moyen de leurs mains.

Les personnes handicapées ont généralement besoin qu'une personne les aide au début de leur parcours et à la fin, pour rentrer leur fauteuil en position repliée à l'intérieur de leur véhicule et l'en sortir, respectivement.

L'invention vise à permettre l'autonomie de ces personnes handicapées pour la conduite de leur véhicule sans qu'elles aient besoin d'une seconde personne pour la manutention de leur fauteuil.
On connaît par le brevet FR 2587018 un dispositif élévateur de fauteuil roulant pour véhicule à commandes au volant, adapté à l'usage des personnes handicapées, notamment des membres inférieurs, comprenant :
- un élément support s'adaptant en fixation sur le toit dudit véhicule, par exemple des barres porte-tout montées sur le toit du véhicule,
- un cadre rigide solidaire dudit élément support et relié au bas de caisse du véhicule, du côté poste de conduite et à l'arrière de la portière correspondante,
- une caisse rigide apte à loger ledit fauteuil roulant comportant sur sa face avant une porte en vue de l'entrée du fauteuil dans la caisse ou de son retrait,
- un système de translation de ladite caisse solidaire dudit cadre rigide, apte à déplacer cette dernière chargée dudit fauteuil depuis une position basse, où le fond de cette dernière est proche du sol et permet d'amener aisément le fauteuil roulant à l'intérieur de cette dernière pour l'enfermer ou de l'en sortir, jusqu'à une position haute de transport au-dessus du toit du véhicule et inversement de cette position haute à la position basse,
- un boîtier de commande solidaire du poste de conduite du véhicule et apte à commander en mouvement ledit système de translation de la caisse, Dispositif élévateur caractérisé en ce que le système de translation comporte :
- deux coulisses parallèles qui s'étendent le long du toit et du côté latéral conducteur du véhicule, de section en U et dont les ouvertures sont opposées l'une à l'autre et qui reçoivent en guidage un train de quatre galets disposés en rectangle, solidaires de la caisse et aptes à supporter en roulement ladite caisse, et
- une chaîne, solidaire par l'un de ses maillons de ladite caisse, montée en boucle fermée au voisinage du plan médian des deux coulisses, protégée par un carter inférieur, guidée par des galets fixés régulièrement sur la longueur du carter, tendue par un galet de rappel à son extrémité inférieure et entraînée par un moteur électrique alimenté par la batterie du véhicule, un tel dispositif a l'inconvénient de nécessiter deux coulisses latérales fixées à demeure sur le véhicule et qui font saillie sur sa surface.

On connaît en outre par le brevet US-A-3608759 un dispositif élévateur de fauteuil roulant sur le toit d'un véhicule automobile pour personne handicapée comportant un élément support fixe, fixé sur le toit du véhicule, un système élévateur d'une boîte destinée à loger le fauteuil roulant en position repliée, apte à déplacer la boîte depuis une position basse de manutention du fauteuil jusqu'à une position haute de transport du fauteuil sur ledit élément de support, des moyens de commande du système élévateur étant aptes à être commandés par la personne handicapée conduisant le véhicule équipé, par exemple sur son tableau de bord, ledit système élévateur et ladite boîte étant montés rotatifs sur ledit élément support fixe sur un élément support mobile commandé depuis lesdits moyens de commande d'une position de transport à une position tournée à 90° de la précédente, permettant le déplacement de la boîte, l'axe de rotation de l'élément support mobile étant situé en une position adéquate pour que, en position orientée à 90°, le déplacement de la boîte entre sa position basse et sa position haute puisse être effectué en arrière d'un plan transversal vertical situé légèrement à l'arrière du siège conducteur et permettant la manoeuvre d'ouverture de la portière correspondante, boîte en position basse. Néanmoins, la boîte est positionnée sensiblement vers l'arrière d'un plan vertical délimité par les portes avant du véhicule, de sorte que cette boîte est disposée sur la partie arrière du toit du véhicule avec une mauvaise répartition des masses relativement au centre de gravité du véhicule.

L'invention vise à remédier à ces inconvénients et propose un dispositif élévateur de fauteuil roulant sur le toit d'un véhicule automobile pour personne handicapée, conforme à la revendication 1.

Les éléments du système de translation sont avantageusement en partie logés dans un carter avant solidaire du plateau rotatif, par exemple un dispositif de treuil des câbles de traction pour la translation de la boîte et les éléments de coulisse et de bras se trouvent sous la boîte. Ce carter est profilé pour former déflecteur aérodynamique au cours du transport de la boîte.

Il résulte de cette disposition que l'ensemble des éléments du dispositif constitue dans la position de transport un volume relativement réduit, d'environ 0,80 m de large, de 1,30 m de longueur et de 0,35 m de profondeur, d'emplacement aisé sur le toit d'un véhicule automobile même de gabarit réduit, en position favorable sur le plan de la répartition des masses pour le transport, sans risque de mise en saillie sur le toit et optimisé sur le plan aérodynamique.

L'invention est illustrée par une description d'un exemple de réalisation présenté ci-après en référence avec dessins annexés, sur lesquels :
- La figure 1 est une vue en coupe dans un plan longitudinal médian d'un dispositif élévateur selon l'invention,
- La figure 2 est une vue de dessus en coupe de ce dispositif, selon un plan horizontal médian,
- La figure 3 est une vue de dessous du dispositif, la boîte étant tourné dans une position angulaire intermédiaire,
- La figure 4 est une vue analogue à la figure 3, la boîte étant tournée à 90° pour translation,
- La figure 5a et 5b montrent selon deux vues, respectivement en plan et de côté le système d'élévation des coulisses pour la translation horizontale de la boîte et
- La figure 6a et 6b montrent le dispositif dans une position de translation de la boîte et donc du fauteuil sur un véhicule équipé.

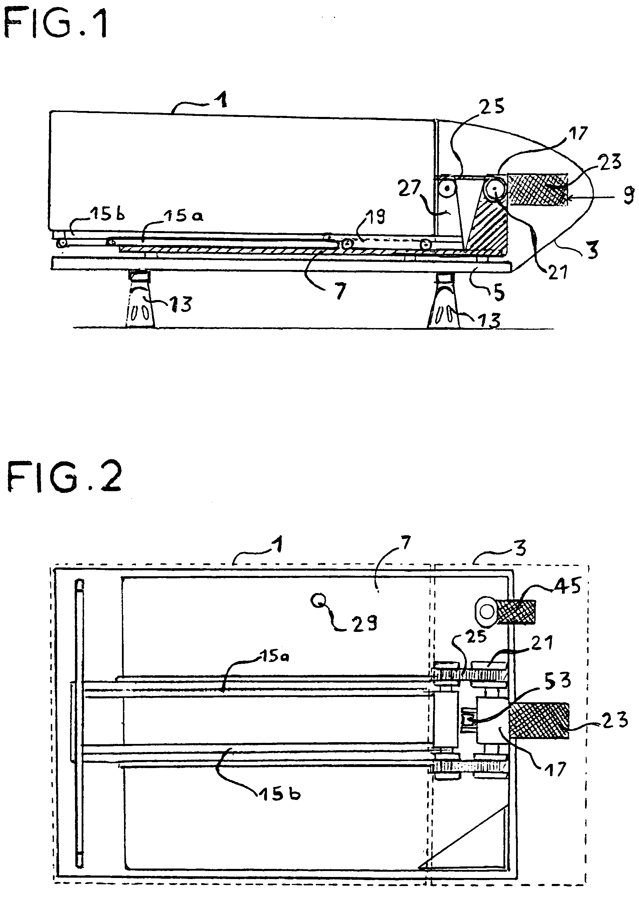

Comme représenté sur la figure 1 et 2, le dispositif élévateur selon l'invention se compose essentiellement d'une boîte parallèlépipédique rectangle 1, d'un carter avant 3, d'un chassis support 5, d'un plateau 7 monté rotatif sur le châssis 5 et d'un système de translation 9 de la boîte 1. La boîte 1 est destinée à loger un fauteuil roulant pour personne handicapée dans une position repliée. Le carter 3 loge la partie antérieure du système de translation de la boîte. Le châssis support 5 est à forme de cadre rectangulaire d'environ 0,80 m de large et 1,20 m de longueur, constitué de profilé tubulaire 11 de section carrée. Ce châssis est monté fixé sur les barres de toit 13 du véhicule à équiper, lequel est adapté de façon classique pour la conduite par des personnes handicapées, en particulier des membres inférieurs.
Le plateau rotatif 7 est une plaque rectangulaire, de dimensions légèrement inférieures à celles du châssis. Il supporte le carter avant qui est fixé sur sa partie avant, la boîte et le système de translation de la boîte. Le système de translation, destiné à déplacer la boîte d'une position inférieure proche du sol à une position supérieure sur le toit du véhicule est constitué d'éléments de coulisses 15 logés entre la boîte et la plateau rotatif et d'éléments de traction 17 proprement dits logés dans le carter avant.

Ces éléments de coulisse, disposés longitudinalement et sensiblement sur la partie médiane sur le plateau comprennent des premiers éléments 15a destinés à assurer la translation horizontale de la boîte et des secondes éléments 15b supportant la boîte reliés à l'élément de traction et destinés à former les éléments de bras verticaux précités pour la translation verticale de la boîte.

Les seconds éléments de coulisse 15b sont montés à cet effet, pivotant sur un chariot intermédiaire 19 guidé en roulement dans les premiers éléments de coulisse.
L'élément de traction est constitué d'un treuil 21 et de son moteur d'actionnement 23, pourvu de deux câbles latéraux 25 reliés à la pièce de renvoi haute 27 des seconds éléments de coulisse. La pièce de renvoi permet de contrôler le basculement de la boîte dans sa transition vers son déplacement vertical. L'ensemble comporte une symétrie par rapport à un plan vertical longitudinal médian, et les deux câbles 25 permettent de bien contrôler la translation verticale de la boîte. Enfin, le dispositif comporte un dispositif de commande de tous les éléments moteurs, (non représentés) de rotation du plateau et de translation de la boîte, monté sur le tableau de bord et apte à être commandé par une personne handicapée. Une description plus précise de ces divers éléments principaux est présentée ci-dessous.

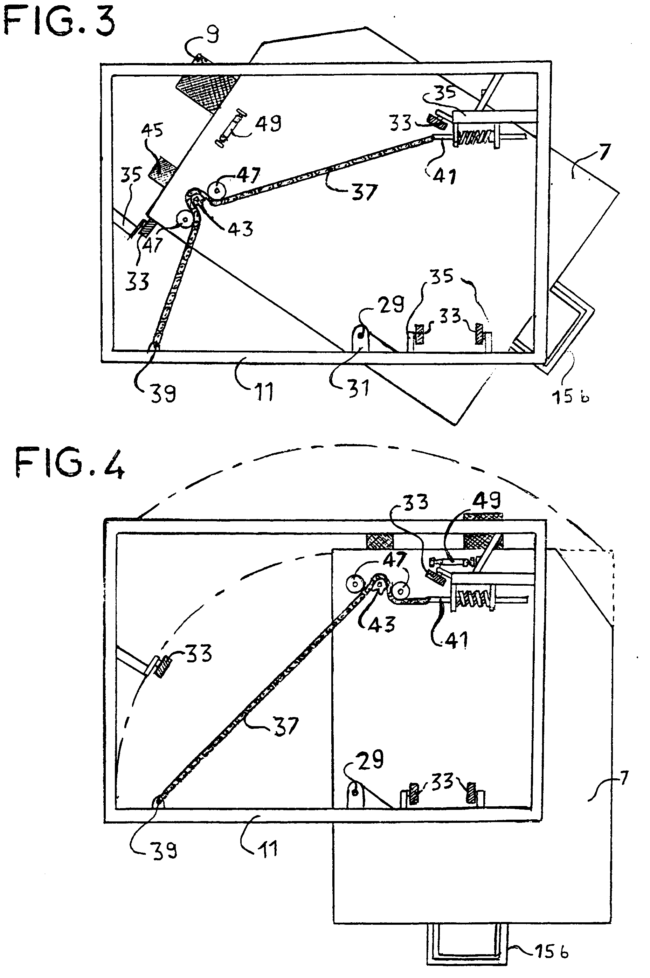

Le mécanisme d'entraînement du plateau rotatif 7 apparaît aux figures 3 et 4. Le plateau rotatif est monté rotatif dans le plan du cadre du châssis 5 à faible distance de celui-ci selon un axe de pivotement 29 situé légèrement à l'arrière d'un plan transversal médian du cadre. Cet axe est monté sur une patte interne 31 fixée au cadre, à faible distance du profilé du côté latéral conducteur du véhicule.
Le plateau est supporté parallèlement au plan du cadre par un ensemble de rouletttes 33 convenablement orientées pour accompagner la rotation du plateau. Ainsi, deux roulettes sont disposées fixées au cadre sensiblement, à l'arrière de l'axe de pivotement 29, une troisième se trouve sur la partie avant du cadre et une quatrième dans l'angle opposé aux deux premières roulettes à la partie arrière du cadre. Ces roulettes 33 sont montées dans le plan du cadre sur des pattes 35 solidaires de celui-ci. Le mécanisme d'entraînement en rotation du plateau comprend une chaîne 37 reliée à un point fixe 39 sur l'angle avant gauche et à un axe de mise en tension 41 rappelé par ressort vers l'arrière. Cette chaîne 37 engrène sur un pignon 43 entraîné en rotation pour un moteur 45 fixé à la partie supérieure du plateau. L'accouplement d'engrenage est réalisé au moyen de deux galets 47 disposés de chaque côté du pignon 43 à sa base et sous lesquels la chaîne passe en s'enroulant autour du pignon. La rotation s'effectue sur la largeur de la chaîne, depuis une position de transport fig 2 où le plateau est dans l'axe du cadre (angle de rotation nul) à une position transversale de translation fig 4, à angle droit de la position de transport. L'entraînement est interrompu par des contacts de fin de course classiques 49 judicieusement disposés, permettant l'arrêt de la rotation à ces deux positions limites, longitudinale de transport et transversale de translation.
Ce contact est par exemple disposé sur la partie avant médiane du plateau, coopérant avec un élément complémentaire initiant l'arrêt, respectivement au devant de la patte avant 35 de la troisième roulette pour l'arrêt en position de transport et de la patte 35 de l'angle arrière de la quatrième roulette et de l'axe de tension de la chaîne pour l'arrêt en position de translation.

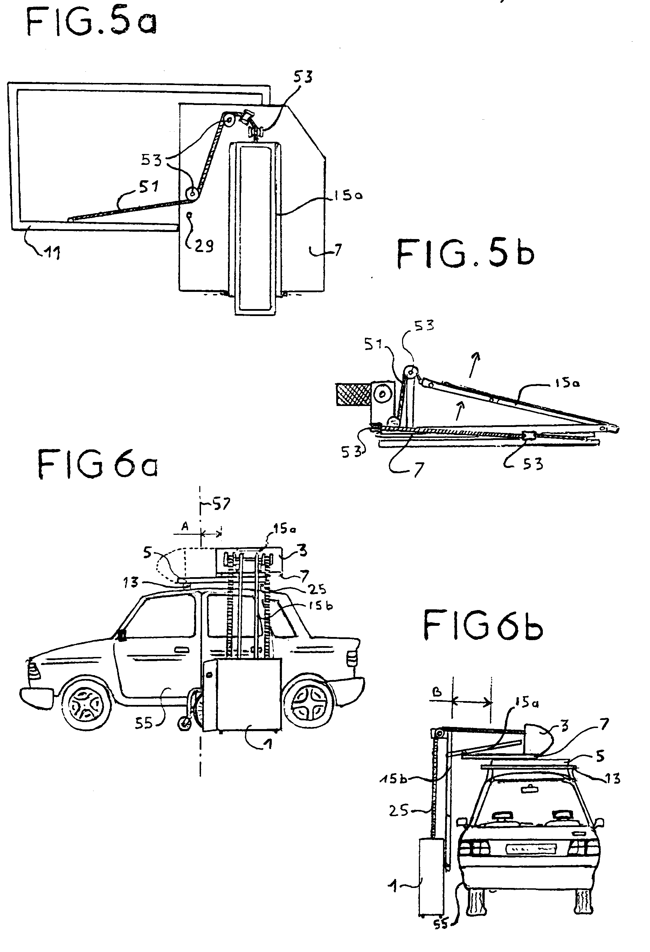

Comme représenté en figure 5a et 5b, les premiers éléments de coulisse 15a montés pivotant à leur extrémité extérieure sur le plateau sont relevés à leur extrémité intérieure, en fin de course de rotation transversale du plateau, ceci au moyen d'un simple câble 51 relié par l'une de ses extrémités au cadre et par son autre extrémité à l'élément de coulisse via un renvoi de deux poulies 53 dont l'une est élevée de 15-20 cm dans le carter avant. En fin de course de rotation à environ 85°, le câble se tend et élevé l'extrémité de coulisse jusqu'à la poulie haute en fin de course. L'élément de coulisse est alors orienté vers le bas, ce qui déplace automatiquement le chariot 19 supporte à l'intérieur des coulisses 15a et donc la boîte. Lorsque le chariot est parvenu à l'extrémité externe de l'élément de coulisse, le second élément de coulisse 15b pivote sur le chariot sous le contrôle des câbles de traction qui s'allongent. Ils se mettent alors en position verticale le long du côté du véhicule et la boîte peut alors descendre le long des éléments de bras verticaux constitués, comme représentés en figure 6a et 6b.

Ces éléments de bras sont reculés d'une distance B appropriée du côté 55 du véhicule et d'une distance A du plan transversale 57 de la partie arrière de la porte côté conducteur pour que, en position basse de la boîte, celle-ci puisse être ouverte et que le fauteuil puisse être retiré de la boîte, ou rentré à l'intérieur par ouverture préalable de la porte latérale de la boîte tournée vers le conducteur, ce dernier se tenant en position assise sur son siège, tirer le fauteuil vers lui et s'y assoir après l'avoir ouvert depuis le poste de conduite en le manoeuvrant latéralement.

Inversement, en fin de translation vers le haut de la boîte pour le retour en position de transport de la boîte avec son fauteuil, l'élément de bras vertical 15 b pivote à l'horizontale sous la traction du câble 25 et revient en alignement du premier élément de coulisse 15a, lequel en rotation vers la position longitudinale s'abaisse pour reposer sur le plateau.
On notera que l'axe de rotation du plateau tel que positionné, permet le retour de l'ensemble "boîte et carter" en position équilibrée sur le toit du véhicule pour le transport.

Ce qui précéde, démontre l'intérêt de l'invention quant à la simplicité des mécanismes de mise en oeuvre de la cinématique de mouvement de la boîte (de rotation et de translation) avec avantage du positionnement de transport de l'ensemble sur le toit du véhicule.

| **NOMENCLATURE** | | |
|---|---|---|
| Boîte | 1 | |
| Carter | 3 | |
| Châssis | 5 | |
| Plateau | 7 | |
| Système de translation | 9 | |
| Profilé/5 | 11 | |
| Barres de toit | 13 | |
| Eléments de coulisse | 15 | 15a (premiers) |
| | | 15b (seconds) |
| Eléments de traction | 17 | |
| Chariot/15 | 19 | |
| Treuil | 21 | |
| Moteur/21 | 23 | |
| Câbles/21 | 25 | |
| Renvoi/15b | 27 | |
| Axe/7 | 29 | |
| Patte pour 29 | 31 | |
| Roulettes | 33 | |
| Pattes/33 | 35 | |
| Chaîne | 37 | |
| Point Fixe/37 | 39 | |
| Axe compensation/37 | 41 | |
| Pignon | 43 | |
| Moteur/43 | 45 | |
| Galets/43 | 47 | |
| Contact fin de course | 49 | |
| Câble levée coulisse | 51 | |
| Renvoi à poulies | 53 | |
| Côté du véhicule | 55 | |
| Plan transv. porte | 57 | |

## Revendications

1. Dispositif élévateur de fauteuil roulant sur le toit d'un véhicule automobile pour personne handicapée comportant un élément support fixe (5), fixé sur le toit du véhicule, un système élévateur (9) d'une boîte (1) destinée à loger le fauteuil roulant en position repliée, apte à déplacer la boîte (1) depuis une position basse de manutention du fauteuil jusqu'à une position haute de transport du fauteuil sur ledit élément de support (5), des moyens de commande du système élévateur étant aptes à être commandés par la personne handicapée conduisant le véhicule équipé, par exemple sur son tableau de bord, ledit système élévateur (9) et ladite boîte étant montés rotatifs sur ledit élément support fixe (5) par un élément support mobile commandé depuis lesdits moyens de commande, d'une position de transport à une position tournée à 90° de la précédente permettant le déplacement de la boîte, l'axe de rotation de l'élément support mobile étant situé en une position adéquate pour que, en position orientée à 90°, le déplacement de la boîte entre sa position basse et sa position haute puisse être effectué en arrière d'un plan transversal vertical situé légèrement à l'arrière du siège conducteur et permettant la manoeuvre d'ouverture de la portière correspondante, boîte en position basse, dispositif caractérisé en ce que le système élévateur (9) est un système de translation (9) comportant en outre des éléments de coulisse (15a) pour la translation horizontale de la boîte et des éléments de bras (15b) pivotant escamotables à l'extrémité des éléments de coulisse (15a) pour le déplacement vertical du fauteuil sur le côté du véhicule, le support mobile est un plateau rotatif (7) et la position de l'axe de rotation est telle qu'en position longitudinale de transport l'ensemble boîte et système de translation soit ramené vers l'avant relativement à la position à 90°, et occupe un volume sur le toit du véhicule relativement équilibré, favorable à la disposition des masses pour le transport sur le toit.

2. Dispositif élévateur de fauteuil roulant selon la revendication 1, caractérisé en ce que le système de translation (9) comporte un dispositif de treuil (21) à câbles de traction (25) pour la translation de la boîte (1) et en ce que les éléments du système de translation (9) tel que le dispositif de treuil (21) des câbles de traction (25) et les éléments de coulisse et de bras (15a, 15b) se trouvant sous la boîte sont en partie logés dans un carter avant (3) solidaire du plateau rotatif (7), ce carter (3) étant profilé pour former déflecteur aérodynamique au cours du transport de la boîte.

3. Dispositif élévateur de fauteuil roulant selon la revendication 1 ou 2 , caractérisé en ce que le plateau rotatif (7) est une plaque rectangulaire, de dimensions légèrement inférieures au châssis, lequel est un cadre rectangulaire en tube profilé (11), en ce qu'il est monté rotatif à faible distance du plan de ce dernier, guidé et supporté par un ensemble de roulettes (33) disposées dans le plan du cadre du châssis, l'axe de pivotement (29) du plateau se trouvant proche du profilé (11) côté conducteur et sensiblement sur la demi-portion arrière du cadre à l'arrière d'un plan transversal médian du cadre, et en ce que le plateau (7) est mis en rotation au moyen d'une chaîne (37) engrenant sur un pignon (43) monté sur la plaque et entraîné par un moteur (45) relié à un point fixe (39), a l'angle avant de celle-ci et à un point avec compensation de la tension sur un axe (41) rappelé vers l'extérieur à l'angle arrière opposé.

4. Dispositif élévateur selon la revendication 3, caractérisé en ce que l'entraînement en rotation du plateau rotatif (7), de 0 à 90° relativement à l'axe longitudinal du véhicule, au moyen d'un moteur (45) d'entraînement du pignon (43) de chaîne (37), fixé sur le plateau, est interrompu par un ou des contacts de fin de course (49).

5. Dispositif élévateur selon l'une des revendications précédentes, caractérisé en ce que l'élément de coulisse (15a), destiné à assurer le mouvement transversal de la boîte (1) est monté pivotant à son extrémité extérieure sur le plateau (7), étant relié à un câble (51) à son extrémité interne opposée, lequel par un renvoi vertical de poules (53) l'élève par tension à l'approche de la position transversale de la boîte, cet élément de coulisse (15a) supportant en guidage de roulement un chariot de galets (19) portant
l'élément de bras (15b) formant bras vertical, monté pivotant à la partie de l'extrémité dudit élément de coulisse (15a) et supportant la boîte (1) en position escamotée, le chariot (19) avec l'élément de bras (15b) roulant en position inclinée de l'élément de coulisse (15a) sous l'entraînement passif ou actif du système de translation (9), au moyen du treuil (21) à câble de traction (25) relié à la boîte.

6. Dispositif élévateur selon la revendication 5, caractérisé en ce que ledit élément de bras (15b) formant bras vertical et porté en position escamotée sur l'élément de coulisse (15a) est relié à au moins un câble de traction (25) du treuil (21) d'actionnement du système de translation et comporte une pièce de renvoi haute (27) du câble de traction (25), laquelle permet de contrôler la rotation ou basculement de la boîte (1) sur l'élément de bras (15b) déployé pour son déplacement vertical.

7. Dispositif élévateur selon l'une des revendications précédentes, caractérisé en ce qu'il comporte une symétrie par rapport à un plan vertical médian, les éléments de coulisse et de bras (15a 15b) se trouvant dans la partie médiane longitudinale du dispositif, et de même les deux câbles de traction (25) de chaque côté du plan vertical médian.

## Claims

1. Device for hoisting a wheelchair onto the roof of a motor vehicle for a handicapped person, comprising a fixed supporting element (5), attached to the roof of the vehicle, a system (9) for hoisting a box (1) intended to house the wheelchair in a folded position, able to move the box (1) from a low handling position of the wheelchair to a high transporting position of the wheelchair on the said supporting element (5), it being possible for the handicapped person driving the vehicle to operate means, fitted for example to the dashboard, for controlling the hoist system, the said hoist system (9) and the said box being mounted rotationally on the fixed supporting element (5) by a movable supporting element controlled from the said means of control, from a transporting position to a position turned through 90° from the preceding position so that the box can be moved, the axis of rotation of the moving supporting element being situated in a suitable position so that, in the position directed at 90°, the box can be moved between its low position and its high position from behind a vertical transverse plane situated slightly behind the driver's seat and enabling the manoeuvre of opening the corresponding door to be carried out with the box in the low position, the device being characterized in that the hoist system (9) is a system of translation (9) additionally having sliding elements (15a) for the horizontal translation of the box and retractable pivoting arm elements (15b) at the ends of the sliding elements (15a) for moving the wheelchair vertically on the side of the vehicle, the movable support being a rotating plate (7) and the position of the axis of rotation being such that in the longitudinal transporting position the assembly of the box and system of translation is brought forwards relative to the 90° position, and occupies a relatively balanced volume on the roof of the vehicle, favourable to the positioning of masses for transport on the roof.

2. Device for hoisting a wheelchair according to claim 1, characterized in that the system of translation (9) comprises a winch device (21) with traction cables (25) for translating the box (1) and in that the elements of the system of translation (9) such as the device (21) for winching the traction cables (25) and the sliding and arm elements (15a, 15b) situated under the box are partly housed in a front casing (3) firmly attached to the rotating plate (7), this casing (3) being profiled so as to form an aerodynamic deflector while the box is being transported.

3. Device for hoisting a wheelchair according to claim 1 or 2, characterized in that the rotating plate (7) is a rectangular plate having dimensions slightly smaller than the chassis, which is a rectangular frame made of shaped tubing (11), in that it is mounted rotationally at a short distance from the plane of the latter, guided and supported by an assembly of small wheels (33) positioned in the plane of the frame of the chassis, the pivoting axis (29) of the plate being situated close to the shaped tubing (11) on the driver's side and substantially on the rear half-portion of the frame behind a middle transverse plane of the frame, and in that the plate (7) is rotated by means of a chain (37) engaging a sprocket (43) mounted on the plate and driven by a motor (45) attached to a fixed point (39) at the front angle of the latter and to a point with tension compensation on an axle (41) pulled back in an outwards direction at the opposite rear angle.

4. Hoisting device according to claim 3, characterized in that the drive of the rotating plate (7), rotating it from 0° to 90° relative to the longitudinal axis of the vehicle, by means of a motor (45) driving the sprocket (43) of the chain (37) attached to the plate, is interrupted by one or more limit contacts (49).

5. Hoisting device according to one of the preceding claims, characterized in that the sliding element (15a), designed to ensure transverse movement of the box (1) is pivotally mounted at its outer end on the plate (7), being connected to a cable (51) at its opposite inner end which, by a vertical pulley transmission (53), hoists it by tension as the box approaches the transverse position, this sliding element (15a) supporting in a guide runner a carriage on rollers (19) carrying the arm element (15b) forming a vertical arm, pivotally mounted at the end part of the said sliding element (15a) and supporting the box (1) in the retracted position, the carriage (19) with the arm element (15b) rolling in the inclined position of the sliding element (15a) under the passive or active drive of the system of translation (9), by means of the winch (21) with the traction cable (25) connected to the box.

6. Hoisting device according to claim 5, characterized in that the said arm element (15b) forming a vertical arm and carried in the retracted position on the sliding element (15a) is connected to at least one traction cable (25) of the winch (21) actuating the system of translation and includes a component (27) for returning the traction cable (25) to the high position, which makes it possible to control the rotation or tilting of the box (1) on the arm element (15b), deployed for its vertical movement.

7. Hoisting device according to one of the preceding claims, characterized in that it possesses a symmetry with respect to a middle vertical plane, the sliding and arm elements (15a, 15b) being situated in the longitudinal middle part of the device, and similarly the two traction cables (25) being either side of the middle vertical plane.

## Patentansprüche

1. Rollstuhl-Hebevorrichtung für eine behinderte Person, um einen Rollstuhl auf das Dach eines Kraftfahrzeuges zu heben, die folgendes aufweist:
- ein festes Trägerelement (5), das an dem Dach des Fahrzeuges befestigt ist,
- ein Hebesystem (9) für einen Kasten (1), der dazu vorgesehen ist, den Rollstuhl in zusammengeklappter Stellung aufzunehmen, wobei das System geeignet ist, den Kasten (1) aus einer unteren Position zur Handhabung des Stuhles bis in eine obere Position zum Transport des Stuhles auf dem Trägerelement (5) zu verlagern,
- eine Steuerungseinrichtung des Hebesystems, die geeignet ist, von einer behinderten Person bedient zu werden, die das Fahrzeug führt, das zum Beispiel in seiner Instrumententafel damit ausgerüstet ist, wobei das Hebesystem (9) und der Kasten drehbar an dem festen Trägerelement (5) mittels eines beweglichen Trägerelementes montiert sind, das von der Steuerungseinrichtung aus einer Transportposition in eine Position gesteuert wird, die um 90° zur vorhergehenden Position gedreht ist und die Verlagerung des Kastens ermöglicht, wobei die Drehachse des beweglichen Trägerelementes in einer geeigneten Position angeordnet ist, damit in der Position, die um 90° orientiert ist, die Verlagerung des Kastens zwischen seiner unteren Position und seiner oberen Position hinter einer vertikalen Querebene ausgeführt werden kann, die ein wenig hinter dem Fahrersitz angeordnet sein kann und die das Öffnen der entsprechenden Wagentür gestattet, wenn der Kasten in der unteren Position ist,
dadurch gekennzeichnet,
daß das Hebesystem (9) ein Translationssystem (9) ist, das darüberhinaus folgendes aufweist:
- Führungselemente (15a) für die horizontale Translation des Kastens und
- Schwenkarmelemente (15b), die einklappbar am Ende der Führungselemente (15a) für die vertikale Verlagerung des Stuhles an der Seite des Fahrzeuges angeordnet sind, wobei der bewegliche Träger eine drehbare Platte (7) ist und die Position der Drehachse so angeordnet ist, daß in der Position in Längsrichtung des Transportes die Gesamtheit von Kasten und Translationssystem mit einer relativen Drehung in die 90°-Position nach vorn zurückgeführt wird, und auf dem Dach des Fahrzeuges ein Volumen einnimmt, das relativ ausgeglichen ist, was vorteilhaft bei der Anordnung von Massen für den Transport auf dem Dach ist.

2. Rollstuhl-Hebevorrichtung nach Anspruch 1,
dadurch gekennzeichnet,
daß das Translationssystem (9) eine Windenvorrichtung (21) mit Zugseilen (25) für die Translation des Kastens (1) aufweist
und daß sich die Elemente des Translationssystems (9), wie die Windenvorrichtung (21) mit den Zugseilen (25) und die Führungs- und Schwenkarmelemente (15a, 15b) unter dem Kasten befinden und teilweise in einem vorderen Gehäuse (3) untergebracht sind, das einstückig mit der drehbaren Platte (7) ausgebildet ist, wobei dieses Gehäuse (3) so geformt ist, daß es während des Transportes des Kastens einen aerodynamischen Windabweiser bildet.

3. Rollstuhl-Hebevorrichtung nach Anspruch 1 oder 2,
dadurch gekennzeichnet,
daß die drehbare Platte (7) eine rechteckige Platte ist, deren Dimensionen etwas kleiner als die des Chassis sind, das als rechteckiger Rahmen aus Profilrohren (11) ausgebildet ist,
daß sie drehbar, mit geringer Distanz zur Ebene des letzteren montiert ist, wobei sie von einer Anordnung von Rollen (33) geführt und getragen ist, die in der Ebene des Rahmens des Chassis angeordnet sind, wobei sich die Drehachse (29) der Platte nahe dem Profil (11) auf der Fahrerseite und deutlich im hinteren Halbbereich des Rahmens hinter der mittleren Querebene des Rahmens befindet, und daß die Platte (7) mittels einer Kette (37) in eine Drehbewegung versetzt wird, wobei die Kette mit einem Ritzel (43) in Eingriff steht, das an der Platte montiert ist und von einem Motor (45) angetrieben wird, wobei die Kette mit einem festen Punkt (39) an ihrer vorderen Ecke und mit einem Punkt mit Spannungsausgleich an einer Achse (41) verbunden ist, die nach außen zu der hinteren, gegenüberliegenden Ecke zurückgezogen wird.

4. Hebevorrichtung nach Anspruch 3,
dadurch gekennzeichnet,
daß der Drehantrieb der drehbaren Platte (7) von 0° bis 90° relativ zur Längsachse des Fahrzeugs mittels eines Motors (45) zum Antrieb des Ritzels (43) der Kette (37), das an der Platte angebracht ist, von einem oder mehreren Endkontakten (49) unterbrochen wird.

5. Hebevorrichtung nach einem der vorhergehenden Ansprüche,
dadurch gekennzeichnet,
daß das Führungselement (15a), das dazu vorgesehen ist, die Querbewegung des Kastens (1) zu sichern, an seinem äußeren Ende an der Platte (7) drehbar montiert ist und mit einem Seil (51) an seinem inneren, gegenüberliegenden Ende verbunden ist, welches es mit einer vertikalen Lenkung mit Rollen (53) durch Zug zur Annäherung an die Querposition des Kastens anhebt, wobei dieses Führungselement (15a) als Rollenführung einen Laufrollenwagen (19) trägt, der die Armelemente (15b) trägt, die die vertikalen Arme bilden, die drehbar an dem Teil des Endes der Führungselemente (15a) montiert sind und den Kasten (1) in eingeklappter Stellung tragen, wobei der Wagen (19) mit dem Armelement (15b) in geneigter Stellung des Führungselementes (15a) unter dem passiven oder aktiven Antrieb des Translationssystems (9) rollt, und zwar mit Hilfe der Winde (21) mit dem Zugseil (25), das mit dem Kasten verbunden ist.

6. Hebevorrichtung nach Anspruch 5,
dadurch gekennzeichnet,
daß das Armelement (15b), das einen vertikalen Arm bildet und in eingeklappter Stellung auf dem Führungselement (15a) getragen wird, mit wenigstens einem Zugseil (25) der Winde (21) zur Betätigung des Translationssystems verbunden ist und ein oberes Lenkteil (27) für das Zugseil (25) aufweist, das es ermöglicht, das Drehen oder das Kippen des Kastens (1) an dem Armelement (15b) zu steuern, das für seine vertikale Verlagerung ausgefahren wird.

7. Hebevorrichtung nach einem der vorhergehenden Ansprüche,
dadurch gekennzeichnet,
daß sie bezüglich einer mittleren vertikalen Ebene eine Symmetrie aufweist
und daß sich die Führungs- und Armelemente (15a, 15b) in dem mittleren Bereich in Längsrichtung der Vorrichtung und außerdem die zwei Zugseile (25) zu beiden Seiten der mittleren vertikalen Ebene befinden.
